# EUROPÄISCHE PATENTSCHRIFT

(11) **EP 4 408 663 B1**
(45) Veröffentlichungstag und Bekanntmachung des Hinweises auf die Patenterteilung: **16.07.2025**
(21) Anmeldenummer: 22773682.4
(22) Anmeldetag: 07.09.2022
(51) Int. Cl.: B32B 17/10

(54) **FUNKTIONSELEMENT MIT ELEKTRISCH STEUERBAREN OPTISCHEN EIGENSCHAFTEN**
FUNCTIONAL ELEMENT WITH ELECTRICALLY DRIVEN OPTICAL PROPERTIES
ÉLÉMENT FONCTIONNEL PRÉSENTANT DES PROPRIÉTÉS OPTIQUES ÉLECTROCOMMANDABLES

(30) Priorität: 27.09.2021 EP 21199155
(43) Veröffentlichungstag der Anmeldung: 07.08.2024
(73) Patentinhaber: Saint-Gobain Sekurit France, 60150 Thourotte (FR)
(72) Erfinder: JACQUES, Florence, 52134 Herzogenrath (DE); YEH, Li-Ya, 52134 Herzogenrath (DE); LABROT, Michael, 52134 Herzogenrath (DE)
(74) Vertreter: Gebauer, Dieter Edmund
(86) Internationale Anmeldenummer: PCT/EP2022/074884
(87) Internationale Veröffentlichungsnummer: WO 2023/046482

(56) Entgegenhaltungen:
- EP-A1- 1 840 449
- EP-A1- 2 416 385
- WO-A1-2020/083562
- WO-A1-2020/083563

## Beschreibung

Die Erfindung betrifft ein Funktionselement mit elektrisch steuerbaren optischen Eigenschaften, ein Verfahren zur stufenartigen Schaltung des Funktionselementes und eine Verbundscheibe umfassend solch ein Funktionselement.

Zum Blendschutz des Fahrers oder weiterer Insassen verfügen herkömmliche Kraftfahrzeuge über mechanische Sonnenblenden. Diese sind klappbar oder verschiebbar am Fahrzeugdach montiert und lassen sich bei Bedarf herunterklappen oder zuziehen, um das Blenden des Fahrers oder Beifahrers zu verhindern oder zumindest abzuschwächen.

Es sind auch Windschutzscheiben und Dachscheiben bekannt, in die eine Sonnenblende in Form eines Funktionselements mit elektrisch regelbaren optischen Eigenschaften integriert ist, insbesondere mit elektrisch regelbarer Transmission oder Streuverhalten. Damit kann der Fahrer das Transmissionsverhalten der Verglasung selbst gegenüber Sonnenstrahlung steuern, die herkömmlichen mechanischen Sonnenblenden werden verzichtbar. Dadurch kann das Gewicht des Fahrzeugs reduziert werden und es wird Platz im Dachbereich gewonnen. Zudem ist das elektrische Regeln der Sonnenblende für den Fahrer komfortabler. Insbesondere bei großflächigen Panoramaglasscheiben im Dachbereich besteht auch das Bedürfnis die Transmission der Scheibe variabel zu steuern. Je nach Sonnenstand besteht dabei die Notwendigkeit lediglich Teilbereiche der Scheibe abzublenden, oder auch als Blickschutz im geparkten Fahrzeug die vollständige Fläche intransparent zu schalten.

Mögliche elektrisch schaltbare Funktionselemente zur Realisierung von regelbaren Sonnenblenden sind elektrochrome Funktionselemente, PDLC-Funktionselemente (*polymer dispersed liquid crystal*)*,* SPD-Funktionselemente (*suspended particle device*) sowie elektrolumineszente Funktionselemente. Die Funktionsweise derartiger Funktionselemente ist dem Fachmann bekannt. Die genannten Funktionselemente umfassen in der Regel zwei Trägerfolien, auf denen jeweils eine Flächenelektrode angeordnet ist, wobei zwischen den Trägerfolien unmittelbar benachbart zu den Flächenelektroden eine aktive Schicht eingebracht ist. Je nach der an den Flächenelektroden anliegenden elektrischen Spannung ändern sich die optischen Eigenschaften der aktiven Schicht. Um eine graduelle oder abschnittsweise Änderung der optischen Eigenschaften zu erzielen muss eine lokal oder abschnittsweise unterschiedliche Spannung an den Flächenelektroden anliegen, die elektrische Kontaktierung also entsprechend angepasst werden.

Die elektrische Kontaktierung von elektrisch steuerbaren Funktionselementen erfolgt üblicherweise über Sammelleiter (auch als "bus bars" bezeichnet), die im Randbereich des Funktionselementes auf die Flächenelektroden aufgebracht sind und diese elektrisch leitend kontaktieren. Durch Verbinden der Sammelleiter mit einer externen Spannungsquelle, beispielsweise über an den Sammelleitern angebrachte Flachleiter, wird eine Spannung an den Flächenelektroden angelegt und die aktive Schicht des Funktionselementes geschaltet. Je kleinflächiger die einzeln elektrisch ansteuerbaren Bereiche, desto aufwändiger und kleinteiliger ist dabei die elektrische Kontaktierung.

EP 2416385 A1 betrifft eine mehrlagige Rückkontaktfolie und ein Verfahren zum Verbinden von Solarzellen mittels dieser.

In EP 1840449 A1 wird ein Leuchtpaneel umfassend ein Glassubstrat, eine elektrisch leitfähige Beschichtung und eine Vielzahl von LEDs beschrieben, wobei die LEDs über Leiterbahnen in der elektrisch leitfähigen Beschichtung elektrisch kontaktiert werden und zwei Sammelleiter an der gleichen Kante des Leuchtpaneels angeordnet sind.

WO 2020/083563 A1 und WO 2020/083562 A1 offenbaren Verbundscheiben mit segmentartig schaltbaren elektrisch steuerbaren Funktionselementen mit einer ersten Gruppe von Sammelleitern, die die in die erste Flächenelektrode eingebrachten Segmente elektrisch kontaktiert, und mindestens einem zweiten Sammelleiter, der die zweite Flächenelektrode elektrisch kontaktiert.

Der vorliegenden Erfindung liegt die Aufgabe zugrunde, ein schaltbares Funktionselement mit elektrisch steuerbaren optischen Eigenschaften bereitzustellen, das eine verbesserte elektrische Ansteuerung mit stufenweiser Schaltbarkeit aufweist.

Die Aufgabe der vorliegenden Erfindung wird durch ein Funktionselement mit elektrisch steuerbaren optischen Eigenschaften gemäß dem unabhängigen Anspruch 1 gelöst. Bevorzugte Ausführungen gehen aus den Unteransprüchen hervor.

Das erfindungsgemäße Funktionselement umfasst eine aktive Schicht zwischen einer ersten Flächenelektrode und einer zweiten Flächenelektrode. Die aktive Schicht weist regelbare optischen Eigenschaften auf, welche über die an die Flächenelektroden angelegte Spannung gesteuert werden können. Die Flächenelektroden sind auf Trägerfolien aufgebracht. Die Flächenelektroden, die aktive Schicht und die Trägerfolien sind typischerweise im Wesentlichen parallel zueinander angeordnet. Die Flächenelektroden sind elektrisch leitend mit Sammelleitern verbunden, über die das Funktionselement an einer externen Spannungsquelle angeschlossen werden kann. Die aktive Schicht ist flächig zwischen der ersten Flächenelektrode und der zweiten Flächenelektrode angeordnet. Das Funktionselement umfasst mehrere Seitenkanten, wobei an mindestens einer ersten Seitenkante ein erster Sammelleiter und ein zweiter Sammelleiter angeordnet sind. Der erste Sammelleiter kontaktiert die erste Flächenelektrode elektrisch leitend, während der zweite Sammelleiter die zweite Flächenelektrode elektrisch leitend kontaktiert. Dabei umfasst die erste Trägerfolie mindestens eine erste Aussparung, innerhalb derer das Material der ersten Trägerfolie mit darauf befindlicher erster Flächenelektrode entfernt ist. Der zweite Sammelleiter ist auf der der aktiven Schicht und der ersten Flächenelektrode abgewandten Oberfläche der ersten Trägerfolie angebracht. Der zweite Sammelleiter durchtritt die erste Aussparung und kontaktiert in diesem Bereich die zweite Flächenelektrode elektrisch. Dabei liegt im Bereich der ersten Aussparung keine aktive Schicht vor und der zweite Sammelleiter wird unmittelbar elektrisch auf der zweiten Flächenelektrode kontaktiert. Der erste Sammelleiter verläuft auf der der aktiven Schicht und der zweiten Flächenelektrode abgewandten Oberfläche der zweiten Trägerfolie. Die zweite Trägerfolie umfasst mindestens eine zweite Aussparung innerhalb derer das Material der zweiten Trägerfolie und der darauf befindlichen zweiten Flächenelektrode entfernt ist. Der erste Sammelleiter greift im Bereich der zweiten Aussparung durch die zweite Trägerfolie hindurch und kontaktiert die erste Flächenelektrode elektrisch. Dabei liegt im Bereich der zweiten Aussparung keine aktive Schicht vor und der erste Sammelleiter wird in diesem Bereich unmittelbar elektrisch auf der ersten Flächenelektrode kontaktiert. Mindestens einer der Sammelleiter ist in mindestens einen ersten Abschnitt und mindestens einen zweiten Abschnitt unterteilt. Somit ist der erste Sammelleiter in mindestens einen ersten Abschnitt und mindestens einen zweiten Abschnitt unterteilt und/oder der zweite Sammelleiter ist in mindestens einen ersten Abschnitt und mindestens einen zweiten Abschnitt unterteilt. Die Abschnitte des ersten Sammelleiters sind unabhängig voneinander ansteuerbar. Gleiches trifft auf die Abschnitte des zweiten Sammelleiters zu.

Bevorzugt sind benachbarte Abschnitte eines Sammelleiters durch Trennlinien voneinander getrennt, wobei im Bereich der Trennlinien die elektrische Leitfähigkeit eines Isolators vorliegt und kein elektrischer Strom zwischen benachbarten Abschnitten des Sammelleiters fließt. Auf diese Weise können Bereiche des Funktionselementes gezielt angesteuert werden. Die Sammelleiter sind können zunächst entlang der mindestens einen Seitenkante angebracht und danach in mindestens zwei Abschnitte geteilt werden, so dass ein einzelnes Aufbringen der Abschnitte nicht erforderlich ist.

Das erfindungsgemäße Funktionselement ermöglicht eine vereinfachte elektrische Kontaktierung der Flächenelektroden im Randbereich. Die Sammelleiter sind jeweils auf den, den Flächenelektroden abgewandten, Oberflächen der Trägerfolien aufgebracht und durchgreifen die jeweils nächstliegende Trägerfolie lokal im Bereich der Aussparungen um auf der dem jeweiligen Sammelleiter entfernter liegenden Flächenelektrode elektrisch kontaktiert zu werden. Auf diese Weise können erste Sammelleiter und zweite Sammelleiter gemeinsam an einer ersten Seitenkante angebracht werden. Dadurch kann die Anzahl der Seitenkanten, an denen eine Kontaktierung erfolgen muss, reduziert werden.

Die Unterteilung eines oder beider Sammelleiter in elektrisch voneinander getrennte Abschnitte ermöglicht, dass die aktive Schicht selektiv abschnittsweise geschaltet werden kann, wobei die selektiv schaltbaren Bereiche der aktiven Schicht innerhalb der Bereiche der Flächenelektroden liegen, in denen über die Sammelleiter eine Spannung anliegt. Zur gezielten Ansteuerung einzelner Bereiche des Funktionselementes werden die gegensätzlichen Pole einer Spannungsquelle je nach gewünschtem Schaltbild der aktiven Schicht mit den jeweiligen Abschnitten der Sammelleiter der ersten Flächenelektrode und der zweiten Flächenelektrode verbunden. Ein erster Pol der Spannungsquelle wird mit Abschnitten der zweiten Sammelleiter verbunden, während der entgegengesetzte Pol der Spannungsquelle mit Abschnitten der ersten Sammelleiter, die im Bereich der anzusteuernden Bereiche der ersten Flächenelektrode kontaktiert sind, verbunden ist. Eine elektrische Potentialdifferenz zwischen den Flächenelektroden liegt demnach nur in den Bereichen des Funktionselementes vor, in denen die entsprechenden Bereiche der ersten Flächenelektrode mit der Spannungsquelle verbunden sind. Demnach wird auch nur in diesen Bereichen die aktive Schicht des Funktionselementes geschaltet. Die gezielte Ansteuerung der Segmente der ersten Flächenelektrode, an denen eine Spannung anzulegen ist, erfolgt beispielsweise über eine externe Steuerungseinheit.

Die ersten Aussparungen und die zweiten Aussparungen sind alternierend zueinander angeordnet. Somit liegen mindestens eine erste Aussparung und mindestens zwei zweite Aussparungen oder mindestens zwei erste Aussparungen und mindestens eine zweite Aussparung vor um eine alternierende Anordnung entlang der ersten Seitenkante zu gewährleisten. Bevorzugt liegen mindestens zwei erste Aussparungen und mindestens zwei zweite Aussparungen vor, die alternierend miteinander entlang der ersten Seitenkante angeordnet sind. Eine alternierende Anordnung der Aussparungen ermöglicht eine gezielte Ansteuerung aller Flächenbereiche des Funktionselementes, wobei deren Präzision mit steigender Anzahl von ersten und zweiten Aussparungen ansteigt.

Das Funktionselement weist mehrere Seitenkanten, besonders bevorzugt vier Seitenkanten, auf. Das Funktionselement kann jedoch auch mehr als vier Seitenkanten umfassen. Jeweils mindestens zwei Seitenkanten des Funktionselementes liegen sich im Wesentlichen paarweise gegenüber. Bei einer Ausführungsform mit vier Seitenkanten ergeben sich daraus zwei Paare aus jeweils zwei gegenüberliegenden Seitenkanten. Die gegenüberliegenden Seitenkanten eines Funktionselementes können parallel zueinander oder nicht parallel zueinander verlaufen. Die Seitenkanten müssen nicht geradlinig sein, sondern weisen häufig eine Biegung auf. Die Länge gegenüberliegender Seitenkanten kann voneinander abweichen. Beispielsweise kann das Funktionselement einen trapezförmigen Umriss besitzen. In einer bevorzugten Ausführungsform weist das Funktionselement mehrere Seitenkanten, beispielsweise vier Seitenkanten, auf.

In einer bevorzugten Ausführungsform des Funktionselementes ist zumindest an einer zweiten Seitenkante mindestens ein weiterer erster Sammelleiter und/oder zweiter Sammelleiter angeordnet. Mindestens ein weiterer Sammelleiter bewirkt eine gleichmäßigere Spannungsverteilung, so dass der Schaltvorgang des Funktionselementes verbessert wird. Im Sinne einer homogenen Spannungsverteilung sind insbesondere Sammelleiter an einander gegenüberliegenden Seitenkanten des Funktionselementes angeordnet. Besonders bevorzugt sind an mindestens einer zweiten Seitenkante ein erster Sammelleiter und ein zweiter Sammelleiter angeordnet, wobei die Kontaktierung der Sammelleiter mit der dazugehörigen Flächenelektrode über erste Aussparungen und zweite Aussparungen erfolgt. Die ersten und zweiten Aussparungen sind dabei entlang der zweiten Seitenkante analog zu den beschriebenen möglichen Anordnungen an der ersten Seitenkante angebracht, wobei sich innerhalb eines Funktionselementes die Anordnung an der ersten Seitenkante von der Anordnung an der zweiten Seitenkante unterscheiden kann.

Die Erfindung ermöglicht es einen ersten Sammelleiter und einen zweiten Sammelleiter gemeinsam an einer Seitenkante des Funktionselementes anzubringen. Dadurch können bei Bedarf andere Seitenkanten des Funktionselementes von Sammelleitern frei gehalten werden. Dies ist beispielsweise vorteilhaft, wenn das Funktionselement sich nicht über die gesamte Fläche der Verglasung erstreckt und eine Kante des Funktionselementes im Durchsichtbereich der Verglasung liegt. An dieser Seitenkante wird im Sinne einer ansprechenden Optik auf einen zweiten Sammelleiter verzichtet.

Bevorzugt weist das Funktionselement entlang der ersten Seitenkante, der zweiten Seitenkante, der dritten Seitenkante und der vierten Seitenkante jeweils einen ersten Sammelleiter und einen zweiten Sammelleiter auf. Auf diese Weise kann bei einer zeitgleichen Schaltung in allen Bereichen des Funktionselementes ein möglichst homogenes Schaltverhalten erreicht werden. Andererseits ist bei einer stufenweisen Schaltung des Funktionselementes eine sehr präzise Ansteuerung einzelner Bereiche möglich.

In einer möglichen Ausführungsform umfassen die erste Flächenelektrode und/oder die zweite Flächenelektrode umfassen mindestens eine Trennlinie, die das Funktionselement in unabhängig voneinander schaltbare Bereiche, auch Segmente genannt, unterteilt. Die Trennlinie kann auch als Isolationslinie bezeichnet werden und bewirkt eine elektrische Trennung der einzelnen Segmente der Flächenelektrode voneinander. Unter einer Trennlinie ist im Sinne der Erfindung ein linienförmiger Bereich innerhalb einer Flächenelektrode zu verstehen, welcher nicht elektrisch leitfähig ist und welcher sich über die gesamte Dicke der Flächenelektrode erstreckt. Eine Trennlinie zwischen den einzelnen Segmenten einer Flächenelektrode stellt sicher, dass kein Stromfluss über andere als das angesteuerte Segment der Beschichtung stattfindet. Die Breite der Segmente einer Flächenelektrode ist definiert durch den Abstand einer oder mehrerer Trennlinien, die das Segment in seiner Breite begrenzen. Die Breite eines Segments wird dabei entlang der Richtung, in der der kürzeste zugehörige Abschnitt des Sammelleiters verläuft, gemessen.

Die mindestens eine Trennlinie verläuft bevorzugt geradlinig, gewellt oder mäanderförmig zwischen zwei gegenüberliegenden Seitenkanten des Funktionselementes. Es sind jedoch auch andere Schnittmuster mit einer oder mehreren Trennlinien denkbar.

Die Segmente der Flächenelektroden sind bevorzugt im Wesentlichen parallel zueinander angeordnet, wobei sich die Segmente durchgehend von einer Seitenkante des Funktionselementes zu einer gegenüberliegenden Seitenkante erstrecken.

Die Anzahl der Segmente innerhalb der Flächenelektroden kann je nach Anwendungsgebiet der Verglasung variieren und beträgt in der Regel zwischen 2 und 20, bevorzugt zwischen 3 und 10.

Die elektrische Kontaktierung der Sammelleiter mit einer externen Stromquelle ist durch geeignete Verbindungskabel, beispielsweise Folienleiter realisiert. Zur Ansteuerung der einzelnen Segmente sind dem Fachmann geeignete externe Steuerungselemente bekannt.

Die elektrische Regelung des Funktionselementes erfolgt beispielsweise mittels Knöpfen, Dreh- oder Schiebereglern, die beispielsweise in den Armaturen eines Fahrzeugs integriert sind. Es kann aber auch eine Schaltfläche zur Regelung in der Verbundscheibe integriert sein, beispielsweise eine kapazitive Schaltfläche. Alternativ kann das Funktionselement auch durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden.

Die mindestens eine Trennlinie ist so in die Flächenelektroden eingebracht, dass die Segmente der Flächenelektrode elektrisch voneinander isoliert sind. Die einzelnen Segmente sind über die einzelnen Abschnitte der Sammelleiter unabhängig voneinander mit der Spannungsquelle verbunden, so dass sie separat angesteuert werden können. So können verschiedene Bereiche des Funktionselementes unabhängig geschaltet werden. Besonders bevorzugt sind die Segmente in Einbaulage horizontal angeordnet. Damit kann die Höhe des intransparenten Bereichs des Funktionselementes vom Benutzer geregelt werden. Der Begriff "horizontal" ist hier breit auszulegen und bezeichnet eine Ausbreitungsrichtung, die zwischen den Seitenkanten der Verbundscheibe, beispielsweise den Seitenkanten einer Windschutzscheibe oder einer Dachscheibe, verläuft. Die Trennlinien müssen nicht notwendigerweise gerade sein, sondern können auch leicht gebogen sein, bevorzugt angepasst an eine eventuelle Biegung der nächstliegenden Scheibenkante, insbesondere im Wesentlichen parallel zur vorderen Dachkante einer Windschutzscheibe. Vertikale Isolierungslinien sind natürlich auch denkbar.

Die Trennlinien weisen beispielsweise eine Breite von 5 µm bis 500 µm, insbesondere 20 µm bis 200 µm auf. Die Breite der Segmente, also der Abstand benachbarter Trennlinien kann vom Fachmann gemäß den Anforderungen im Einzelfall geeignet gewählt werden.

Die Trennlinien können durch Laserablation, mechanisches Schneiden oder Ätzen während der Herstellung des Funktionselements eingebracht werden. Bereits laminierte Mehrschichtfolien können auch nachträglich noch mittels Laserablation segmentiert werden.

Die Sammelleiter (bus bars) sind beispielsweise als Streifen eines elektrisch leitfähigen Materials oder elektrisch leitfähige Aufdrucke, mit den Flächenelektroden verbunden. Bevorzugt sind die Sammelleiter als elektrisch leitfähige Aufdrucke umfassend Silber ausgeführt.

Das Funktionselement kann wahlweise als PDLC-Element, als SPD-Funktionselement, als elektrochromes oder elektrolumineszentes Funktionselement ausgeführt sein, wobei sich die Zusammensetzung der aktiven Schicht je nach Art des Funktionselementes unterscheidet. Die genannten Funktionselemente sowie deren Aufbau sind dem Fachmann bekannt.

Bevorzugt ist das Funktionselement ein elektrochromes Funktionselement und die aktive Schicht somit eine elektrochrome Schicht. Die aktive Schicht eines elektrochromen Funktionselements ist eine elektrochemisch aktive Schicht. Die Transmission von sichtbarem Licht ist vom Einlagerungsgrad von Ionen in die aktive Schicht abhängig, wobei die Ionen beispielsweise durch eine Ionenspeicherschicht zwischen aktiver Schicht und einer Flächenelektrode bereitgestellt werden. Die Transmission kann durch die an die Flächenelektroden angelegte Spannung, welche eine Wanderung der Ionen hervorruft, beeinflusst werden. Geeignete funktionelle Schichten enthalten beispielsweise zumindest Wolframoxid oder Vanadiumoxid. Elektrochrome Funktionselemente sind beispielsweise aus WO 2012007334 A1, US 20120026573 A1, WO 2010147494 A1 und EP 1862849 A1 bekannt.

In einer weiteren Ausgestaltung ist das Funktionselement ein PDLC-Funktionselement (*polymer dispersed liquid crystal*)*.* Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Ein solches Funktionselement ist beispielsweise aus DE 102008026339 A1 bekannt.

In einer weiteren Ausgestaltung ist das Funktionselement ein SPD-Funktionselement (*suspended particle device*). Dieses enthält eine aktive Schicht umfassend suspendierte Partikel, wobei die Absorption von Licht durch die aktive Schicht mittels Anlegen einer Spannung an die Flächenelektroden veränderbar ist. Die Absorptionsänderung beruht auf der Ausrichtung der stäbchenartigen Partikel im elektrischen Feld bei angelegter elektrischer Spannung. SPD-Funktionselemente sind beispielsweise aus EP 0876608 B1 und WO 2011033313 A1 bekannt.

Im Falle eines elektrolumineszenten Funktionselementes enthält die aktive Schicht elektrolumineszente Materialen, insbesondere organische elektrolumineszente Materialen, deren Lumineszenz durch Anlegen einer Spannung angeregt wird. Elektrolumineszente Funktionselemente sind beispielsweise aus US 2004227462 A1 und WO 2010112789 A2 bekannt. Das elektrolumineszente Funktionselement kann als einfache Lichtquelle verwendet werden, oder als Display mit dem beliebige Darstellungen gezeigt werden können.

Die ersten Sammelleiter und die zweiten Sammelleiter umfassen eine elektrisch leitfähige Struktur, bevorzugt enthaltend Silber, und weisen eine Dicke von 5 µm bis 40 µm auf.

Die Sammelleiter sind dafür vorgesehene, mit einer externen Spannungsquelle verbunden zu werden, so dass ein elektrischer Potentialunterschied zwischen der ersten Flächenelektrode und der zweiten Flächenelektrode besteht.

Das Anbringen der Sammelleiter kann insbesondere durch Auflegen, Aufdrucken, Löten oder Kleben erfolgen.

In einer bevorzugten Ausführungsform sind die Sammelleiter als aufgedruckte und eingebrannte leitfähige Struktur ausgebildet. Die aufgedruckten Sammelleiter enthalten zumindest ein Metall, bevorzugt Silber. Die elektrische Leitfähigkeit wird bevorzugt über Metallpartikel, enthalten im Sammelleiter, besonders bevorzugt über Silberpartikel, realisiert. Die Metallpartikel können sich in einer organischen und / oder anorganischen Matrix wie Pasten oder Tinten befinden, bevorzugt als gebrannte Siebdruckpaste mit Glasfritten. Die Schichtdicke der aufgedruckten Sammelleiter beträgt bevorzugt von 5 µm bis 40 µm, besonders bevorzugt von 8 µm bis 20 µm und ganz besonders bevorzugt von 10 µm bis 15 µm. Aufgedruckte Sammelleiter mit diesen Dicken sind technisch einfach zu realisieren und weisen eine vorteilhafte Stromtragfähigkeit auf.

Alternativ sind die Sammelleiter als Streifen einer elektrisch leitfähigen Folie ausgebildet. Die Stromsammelschienen enthalten dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 µm bis 500 µm, besonders bevorzugt von 30 µm bis 300 µm. Sammelleiter aus elektrisch leitfähigen Folien mit diesen Dicken sind technisch einfach zu realisieren und weisen eine vorteilhafte Stromtragfähigkeit auf. Der Streifen kann mit der Flächenelektrode beispielsweise über eine Lotmasse, über einen elektrisch leitfähigen Kleber oder ein elektrisch leitfähiges Klebeband oder durch direktes Auflegen elektrisch leitend verbunden sein. Zur Verbesserung der leitenden Verbindung kann zwischen Flächenelektrode und Sammelleiter beispielsweise eine silberhaltige Paste angeordnet werden.

Die erste Flächenelektrode und die zweite Flächenelektrode werden von jeweils einer elektrisch leitfähigen Schicht gebildet. Diese elektrisch leitfähigen Schichten enthalten zumindest ein Metall, eine Metalllegierung oder ein transparentes leitfähiges Oxid, bevorzugt ein transparentes leitfähiges Oxid, und weisen eine Dicke von 10 nm bis 2 µm auf. Die Flächenelektroden sind bevorzugt transparent. Transparent bedeutet hier durchlässig für elektromagnetische Strahlung, vorzugsweise elektromagnetische Strahlung einer Wellenlänge von 300 nm bis 1.300 nm und insbesondere für sichtbares Licht. Erfindungsgemäße elektrisch leitfähige Schichten sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Einzelschichten. Die funktionellen Einzelschichten enthalten bevorzugt zumindest ein Metall, beispielsweise Silber, Gold, Kupfer, Nickel und/oder Chrom, oder eine Metalllegierung. Die funktionellen Einzelschichten enthalten besonders bevorzugt mindestens 90 Gew. % des Metalls, insbesondere mindestens 99,9 Gew. % des Metalls. Die funktionellen Einzelschichten können aus dem Metall oder der Metalllegierung bestehen. Die funktionellen Einzelschichten enthalten besonders bevorzugt Silber oder eine silberhaltige Legierung. Solche funktionellen Einzelschichten weisen eine besonders vorteilhafte elektrische Leitfähigkeit bei gleichzeitiger hoher Transmission im sichtbaren Spektralbereich auf. Die Dicke einer funktionellen Einzelschicht beträgt bevorzugt von 5 nm bis 50 nm, besonders bevorzugt von 8 nm bis 25 nm. In diesem Dickenbereich wird eine vorteilhaft hohe Transmission im sichtbaren Spektralbereich und eine besonders vorteilhafte elektrische Leitfähigkeit erreicht.

Die Flächenelektroden können prinzipiell durch jede elektrisch leitfähige Schicht gebildet werden, die elektrisch kontaktiert werden kann.

Das Funktionselement wird bevorzugt als Mehrschichtfolie mit zwei äußeren Trägerfolien bereitgestellt. Bei einer solchen Mehrschichtfolie sind die Flächenelektroden und die aktive Schicht zwischen den beiden Trägerfolien angeordnet. Mit äußerer Trägerfolie ist hier gemeint, dass die Trägerfolien die beiden Oberflächen der Mehrschichtfolie ausbilden. Das Funktionselement kann dadurch als laminierte Folie bereitgestellt werden, die vorteilhaft verarbeitet werden kann. Das Funktionselement ist durch die Trägerfolien vorteilhaft vor Beschädigung, insbesondere Korrosion geschützt. Die Mehrschichtfolie enthält in der angegebenen Reihenfolge zumindest eine erste Trägerfolie, eine erste Flächenelektrode, eine aktive Schicht, eine zweite Flächenelektrode und eine zweite Trägerfolie.

Bevorzugt enthalten die erste Trägerfolie und/oder die zweite Trägerfolie zumindest ein im Autoklavprozess nicht vollständig aufschmelzendes Polymer, bevorzugt Polyethylenterephthalat (PET). Besonders bevorzugt bestehen die erste und die zweite Trägerfolie aus einer PET-Folie. Das ist besonders vorteilhaft im Hinblick auf die Stabilität der Mehrschichtfolie. Die Trägerfolien können aber auch beispielsweise Ethylenvinylacetat (EVA) und / oder Polyvinylbutyral (PVB), Polypropylen, Polycarbonat, Polymethylmetacrylat, Polyacrylat, Polyvinylchlorid, Polyacetatharz, Gießharze, Acrylate, Fluorinierte Ethylen-Propylene, Polyvinylfluorid und/oder Ethylen-Tetrafluorethylen enthalten. Die Dicke jeder Trägerfolie beträgt bevorzugt von 0,1 mm bis 1 mm, besonders bevorzugt von 0,1 mm bis 0,2 mm. Die erfindungsgemäßen Trägerfolien sind bevorzugt transparent. Die Flächenelektroden sind bevorzugt auf einer Oberfläche der Trägerfolie angeordnet, das heißt auf genau einer der beiden Seiten der Trägerfolie (also auf deren Vorderseite oder deren Rückseite). Die Trägerfolien sind dabei im Schichtstapel der Mehrschichtfolie so ausgerichtet, dass die Flächenelektroden benachbart zur aktiven Schicht angeordnet sind.

Unter elektrisch regelbaren optischen Eigenschaften werden im Sinne der Erfindung solche Eigenschaften verstanden, die stufenlos regelbar sind, aber gleichermaßen auch solche, die zwischen zwei oder mehr diskreten Zuständen geschaltet werden können.

Das Funktionselement kann natürlich außer der aktiven Schicht und den Flächenelektroden weitere an sich bekannte Schichten aufweisen, beispielsweise Barriereschichten, Blockerschichten, Antireflexionsschichten, Schutzschichten und/oder Glättungsschichten.

Funktionselemente als Mehrschichtfolien sind kommerziell erhältlich. Das Funktionselement wird typischerweise aus einer Mehrschichtfolie mit größeren Ausmaßen in der gewünschten Form und Größe ausgeschnitten. Dies kann mechanisch erfolgen, beispielsweise mit einem Messer. In einer vorteilhaften Ausführung erfolgt das Ausschneiden mittels eines Lasers. Es hat sich gezeigt, dass die Seitenkante in diesem Fall stabiler ist als beim mechanischen Schneiden. Bei mechanisch geschnittenen Seitenkanten kann die Gefahr bestehen, dass sich das Material gleichsam zurückzieht, was optisch auffällig ist und die Ästhetik der Scheibe nachteilig beeinflusst.

In einer vorteilhaften Ausgestaltung weist das Funktionselement eine Randversiegelung auf. Die Randversiegelung bedeckt umlaufend die Seitenkante des Funktionselements und verhindert insbesondere die Diffusion von chemischen Bestandteilen der thermoplastischen Zwischenschicht, beispielsweise Weichmacher, in die aktive Schicht. Zumindest entlang der, bei Windschutzscheiben in Durchsicht sichtbaren, Unterkante des Funktionselements und bevorzugt entlang aller Seitenkanten ist die Randversiegelung durch einen transparenten farblosen Klebstoff oder ein transparentes farbloses Klebeband gebildet. Beispielsweise können acryl- oder silikonbasierte Klebebänder als Randversiegelung verwendet werden. Die transparente farblose Randversiegelung hat den Vorteil, dass die Kante des Funktionselements bei Durchsicht nicht störend auffällt. Bevorzugt wird eine derartige Randversiegelung auch bei nicht sichtbaren Seitenkanten angewandt.

Die Erfindung betrifft des Weiteren eine Verbundscheibe mindestens umfassend ein erfindungsgemäßes Funktionselement, eine thermoplastische Zwischenschicht, eine erste Scheibe und eine zweite Scheibe, wobei die thermoplastische Zwischenschicht eine erste thermoplastische Verbundfolie aufweist, die zwischen Funktionselement und erster Scheibe angeordnet ist, und eine zweite thermoplastische Verbundfolie aufweist, die zwischen Funktionselement und zweiter Scheibe angeordnet ist. Auf diese Weise kann das Funktionselement sicher über die thermoplastische Zwischenschicht in der Verbundscheibe integriert werden.

Die erste Scheibe und die zweite Scheibe der erfindungsgemäßen Verbundscheibe stellen im Einbauzustand der Verbundscheibe in einem Kraftfahrzeug oder in einem Gebäude die Innenscheibe und die Außenscheibe dar.

Das Funktionselement ist über die Zwischenschicht zwischen der ersten Scheibe und der zweiten Scheibe der Verbundscheibe eingebunden. Die Zwischenschicht umfasst dabei eine erste thermoplastische Verbundfolie, die das Funktionselement mit der ersten Scheibe verbindet, und eine zweite thermoplastische Verbundfolie, die das Funktionselement mit der zweiten Scheibe verbindet. Typischerweise wird die Zwischenschicht durch mindestens die erste und die zweite thermoplastische Verbundfolie gebildet, die flächig aufeinander angeordnet werden und miteinander laminiert werden, wobei das Funktionselement zwischen die beiden Schichten eingelegt wird. Die mit dem Funktionselement überlappenden Bereiche der Verbundfolien bilden dann die Bereiche, welche das Funktionselement mit den Scheiben verbinden. In anderen Bereichen der Scheibe, wo die thermoplastischen Verbundfolien direkten Kontakt zueinander haben, können sie beim Laminieren derart verschmelzen, dass die beiden ursprünglichen Schichten unter Umständen nicht mehr erkennbar sind und stattdessen eine homogene Zwischenschicht vorliegt.

Eine thermoplastische Verbundfolie kann beispielsweise durch eine einzige thermoplastische Folie ausgebildet werden. Eine thermoplastische Verbundfolie kann auch aus Abschnitten unterschiedlicher thermoplastischer Folien gebildet werden, deren Seitenkanten aneinandergesetzt sind. Zusätzlich zu einer ersten thermoplastischen Verbundfolie oder einer zweiten thermoplastischen Verbundfolie können auch weitere thermoplastische Verbundfolien vorhanden sein. Diese können bei Bedarf auch zur Einbettung weiterer Folien umfassend funktionelle Schichten, beispielsweise infrarotreflektierender Schichten oder akustisch dämpfender Schichten, genutzt werden.

Die thermoplastischen Verbundfolien können auch getönte oder gefärbte Bereiche enthalten. Solche Folien sind beispielsweise durch Koextrusion erhältlich. Alternativ können ein ungetönter Folienabschnitt und ein getönter oder gefärbter Folienabschnitt zur einer thermoplastischen Verbundfolie zusammengesetzt werden. Der getönte oder gefärbte Bereich kann homogen gefärbt oder getönt sein, das heißt eine ortsunabhängige Transmission aufweisen. Die Tönung oder Färbung kann aber auch inhomogenen sein, insbesondere kann ein Transmissionsverlauf realisiert sein.

In einer möglichen Ausführungsform ist die Verbundscheibe eine Windschutzscheibe eines Kraftfahrzeugs. Die Windschutzscheibe umfasst eine Oberkante und eine Unterkante auf sowie zwei zwischen Oberkante und Unterkante verlaufende Seitenkanten. Mit Oberkante wird diejenige Kante bezeichnet, welche dafür vorgesehen ist, in Einbaulage nach oben in Richtung des Fahrzeugdachs zu weisen. Die Oberkante wird in der Regel als Dachkante oder vordere Dachkante bezeichnet. Mit Unterkante wird diejenige Kante bezeichnet, welche dafür vorgesehen ist, in Einbaulage nach unten in Richtung der Motorhaube des Fahrzeugs zu weisen. Die Unterkante als wird allgemein als Motorkante bezeichnet.

Windschutzscheiben weisen ein zentrales Sichtfeld auf, an dessen optische Qualität hohe Anforderungen gestellt werden. Das zentrale Sichtfeld muss eine hohe Lichttransmission aufweisen (typischerweise größer als 70%). Das besagte zentrale Sichtfeld ist insbesondere dasjenige Sichtfeld, das vom Fachmann als Sichtfeld B, Sichtbereich B oder Zone B bezeichnet wird. Das Sichtfeld B und seine technischen Anforderungen sind in der Regelung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") festgelegt. Dort ist das Sichtfeld B in Anhang 18 definiert.

Das Funktionselement stellt in einer möglichen Ausgestaltung der Windschutzscheibe eine Sonnenblende dar und ist oberhalb des zentralen Sichtfelds (Sichtfeld B) angeordnet. Das bedeutet, dass das Funktionselement im Bereich zwischen dem zentralen Sichtfeld und der vorderen Dachkante der Windschutzscheibe angeordnet ist. Das Funktionselement muss nicht den gesamten Bereich abdecken, ist aber vollständig innerhalb dieses Bereichs positioniert und ragt nicht in das zentrale Sichtfeld hinein. Anders ausgedrückt weist das Funktionselement einen geringeren Abstand zur Oberkante der Windschutzscheibe auf als der zentrale Sichtbereich. Somit wird die Transmission des zentralen Sichtfelds nicht durch das Funktionselement beeinträchtigt, welches an einer ähnlichen Stelle positioniert ist wie eine klassische mechanische Sonnenblende im heruntergeklappten Zustand.

Die Zwischenschicht im zentralen Sichtfeld der Windschutzscheibe ist klar und transparent. Dadurch wird sichergestellt, dass die Durchsicht durch das zentrale Sichtfeld nicht eingeschränkt wird, so dass die Scheibe als Windschutzscheibe verwendet werden kann. Unter einer transparenten thermoplastischen Zwischenschicht wird eine Schicht mit einer Lichttransmission im sichtbaren Spektralbereich von mindestens 70 % bevorzugt mindestens 80% bezeichnet. Die transparente Zwischenschicht liegt zumindest im Sichtfeld A, bevorzugt auch im Sichtfeld B nach ECE-R43 vor.

Die Windschutzscheibe ist bevorzugt für ein Kraftfahrzeug vorgesehen, besonders bevorzugt für einen Personenkraftwagen.

In einer möglichen Ausführungsform ist ein Bereich der thermoplastischen Zwischenschicht, über den das Funktionselement mit der Außenscheibe beziehungsweise der Innenscheibe verbunden ist, getönt oder gefärbt. Die Transmission dieses Bereichs im sichtbaren Spektralbereich ist also herabgesetzt gegenüber einer nicht getönten oder gefärbten Schicht. Der getönte/gefärbte Bereich der thermoplastischen Zwischenschicht erniedrigt somit die Transmission der Windschutzscheibe im Bereich der Sonnenblende. Insbesondere wird der ästhetische Eindruck des Funktionselements verbessert, weil die Tönung zu einem neutraleren Erscheinungsbild führt, das auf den Betrachter angenehmer wirkt.

In einer weiteren bevorzugten Ausführungsform der erfindungsgemäßen Verbundscheibe wird diese als Dachscheibe eines Kraftfahrzeugs eingesetzt. Die Dachscheibe umfasst eine vordere Dachkante, die zur Windschutzscheibe des Fahrzeugs benachbart ist, eine hintere Dachkante, die in Richtung der Heckscheibe weist und zwei Seitenkanten, die entlang der Fahrzeugtüren zwischen vorderer Dachkante und hinterer Dachkante verlaufen. Das Funktionselement ist als großflächige Verschattung der Dachscheibe ausgestaltet, wobei das Funktionselement auf einer Fläche von mindestens 80 % des gesamten Durchsichtbereichs der Dachscheibe, bevorzugt mindestens 90 %, beispielsweise 100 %, des gesamten Durchsichtbereichs, angeordnet ist.

Die an den Kanten der als Dachscheibe oder Windschutzscheibe eingesetzten Verbundscheibe befindlichen Sammelleiter werden durch den üblicherweise im Randbereich der Scheibe verwendeten opaken Abdeckdruck kaschiert. Wird das Funktionselement als Sonnenblende in einer Windschutzscheibe eingesetzt, so bleibt die an den Durchsichtbereich der Windschutzscheibe grenzende Kante des Funktionselementes in der Regel frei von Abdeckdruck.

In einer bevorzugten Ausgestaltung ist das Funktionselement, genauer die Seitenkanten des Funktionselements umlaufend von einer thermoplastischen Rahmenfolie umgeben. Die Rahmenfolie ist rahmenartig ausgebildet mit einer Aussparung, in welche das Funktionselement eingelegt wird. Die thermoplastische Rahmenfolie kann durch eine thermoplastische Folie gebildet werden, in welche die Aussparung durch Ausschneiden eingebracht worden ist. Alternativ kann die thermoplastische Rahmenfolie auch aus mehreren Folienabschnitten um das Funktionselement zusammengesetzt werden. Die Zwischenschicht ist somit in einer bevorzugten Ausführungsform aus insgesamt mindestens drei flächig aufeinander angeordneten thermoplastischen Verbundfolien gebildet, wobei die Rahmenfolie als mittlere Schicht eine Aussparung ausweist, in der das Funktionselement angeordnet ist. Bei der Herstellung wird die thermoplastische Rahmenfolie zwischen der ersten und der zweiten thermoplastischen Verbundfolie angeordnet, wobei die Seitenkanten aller thermoplastischen Folien bevorzugt in Deckung befindlich sind. Die thermoplastische Rahmenfolie weist bevorzugt etwa die gleiche Dicke auf wie das Funktionselement. Dadurch wird der lokale Dickenunterschied der Verbundscheibe, der durch das örtlich begrenzte Funktionselement eingebracht wird, kompensiert, so dass Glasbruch beim Laminieren vermieden werden kann. Wird das Funktionselement großflächig in die Verbundscheibe eingebracht, so kann auf eine Rahmenfolie verzichtet werden.

Die in Durchsicht durch die Verbundscheibe sichtbaren Seitenkanten des Funktionselements sind bevorzugt bündig mit der thermoplastischen Rahmenfolie angeordnet, so dass zwischen der Seitenkante des Funktionselements und der zugeordneten Seitenkante der thermoplastischen Rahmenfolie keine Lücke existiert. Das gilt insbesondere für die Unterkante eines Funktionselements als Sonnenblende einer Windschutzscheibe, in der diese Kante typischerweise sichtbar ist. So ist die Grenze zwischen thermoplastischer Rahmenfolie und Funktionselement optisch unauffälliger.

Automobilverglasungen, insbesondere Windschutzscheiben, Heckscheiben und Dachscheiben, weisen meist einen umlaufenden peripheren Abdeckdruck aus einer opaken Emaille auf, der insbesondere dazu dient, den zum Einbau der Scheibe verwendeten Kleber vor UV-Strahlung zu schützen und optisch zu verdecken. Dieser periphere Abdeckdruck wird bevorzugt dazu verwendet, auch die Kanten des Funktionselementes zu verdecken, die sich im Randbereich der Verglasung befinden. Die Sammelleiter sowie die erforderlichen elektrischen Anschlüsse werden ebenfalls im Bereich des Abdeckdrucks angebracht. Das Funktionselement ist auf diese Weise vorteilhaft ins Erscheinungsbild der Verbundscheibe integriert. Bevorzugt weist zumindest die als Außenscheibe verwendete Scheibe einen solchen Abdeckdruck auf, besonders bevorzugt sind sowohl die erste Scheibe als auch die zweite Scheibe (Innenscheibe und Außenscheibe) bedruckt, so dass die Durchsicht von beiden Seiten gehindert wird.

Das Funktionselement kann auch Aussparungen oder Löcher aufweisen, etwa im Bereich sogenannter Sensorfenster oder Kamerafenster. Diese Bereiche sind dafür vorgesehen, mit Sensoren oder Kameras ausgestattet zu werden, deren Funktion durch ein regelbares Funktionselement im Strahlengang beeinträchtigt werden würde, beispielsweise Regensensoren.

Das Funktionselement ist bevorzugt über die gesamte Breite der Verbundscheibe angeordnet, abzüglich eines beidseitigen Randbereichs mit einer Breite von beispielsweise 2 mm bis 20 mm. Auch zur Oberkante weist das Funktionselement bevorzugt einen Abstand von beispielsweise 2 mm bis 20 mm auf. Das Funktionselement ist so innerhalb der Zwischenschicht eingekapselt und vor Kontakt mit der umgebenden Atmosphäre und Korrosion geschützt.

Die erste thermoplastische Verbundfolie und die zweite thermoplastische Verbundfolie sowie gegebenenfalls auch die thermoplastische Rahmenfolie enthalten bevorzugt zumindest Polyvinylbutyral (PVB), Ethylenvinylacetat (EVA) und / oder Polyurethan (PU), besonders bevorzugt PVB.

Die Dicke jeder thermoplastischen Verbundfolie sowie der Rahmenfolie beträgt bevorzugt von 0,2 mm bis 2 mm, besonders bevorzugt von 0,3 mm bis 1 mm, insbesondere von 0,3 mm bis 0,5 mm, beispielsweise 0,38 mm.

Die erste Scheibe und die zweite Scheibe sind bevorzugt aus Glas gefertigt sind, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Alumino-Sililat-Glas, oder aus starren klaren Kunststoffen, beispielsweise Polycarbonat oder Polymethylmethacrylat. Die Scheiben können klar oder auch getönt oder gefärbt sein. Sofern die Verbundscheibe als Windschutzscheibe verwendet wird, sollte diese im zentralen Sichtbereich eine ausreichende Lichttransmission aufweisen, bevorzugt mindestens 70 % im Haupt-Durchsichtbereich A gemäß ECE-R43.

**Die erste** Scheibe, die zweite Scheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen.

Die Dicke der ersten Scheibe und der zweiten Scheibe kann breit variieren und so den Erfordernissen im Einzelfall angepasst werden. Die erste Scheibe und die zweite Scheibe weisen bevorzugt Dicken von 0,5 mm bis 5 mm auf, besonders bevorzugt von 1 mm bis 3 mm.

Die Erfindung umfasst außerdem ein Verfahren zum Schalten eines erfindungsgemäßen Funktionselementes, wobei zumindest zwischen einem ersten Abschnitt des ersten Sammelleiters und einem ersten Abschnitt des zweiten Sammelleiters eine erste elektrische Spannung U₁ angelegt wird. Die erste elektrische Spannung U₁ entspricht der Schaltspannung des Funktionselementes, also der Spannung bei der das Funktionselement vollständig in den aktiven Zustand übergeht. Ein vollständiger Übergang in den aktiven Zustand ist daran zu erkennen, dass bei weiterer Erhöhung der anliegenden Spannung keine weitere Änderung der optischen Eigenschaften des Funktionselementes erfolgt. Zwischen einem zweiten Abschnitt des ersten Sammelleiters und einem zweiten Abschnitt des zweiten Sammelleiters wird eine zweite elektrische Spannung U₂ angelegt, deren Betrag geringer ist als der Betrag der Spannung U₁. Somit findet in einem zweiten Bereich des Funktionselementes, der dem zweiten Abschnitt des ersten Sammelleiters und dem zweiten Abschnitt des zweiten Sammelleiters zugeordnet ist, kein vollständiger Übergang in den aktiven Zustand statt. Im ersten Bereich des Funktionselementes, der dem ersten Abschnitt des ersten Sammelleiters und dem ersten Abschnitt des zweiten Sammelleiters zugeordnet ist, findet hingegen ein vollständiger Übergang in den aktiven Zustand statt. Der erste Bereich im aktiven Zustand grenzt somit an den zweiten Bereich im teilweise aktivierten Zustand, so dass ein optisch ansprechender Verlauf der optisch steuerbaren Eigenschaften des Funktionselementes entsteht.

Bevorzugt grenzt an den zweiten Bereich des Funktionselementes, der dem zweiten Abschnitt des ersten Sammelleiters und dem zweiten Abschnitt des zweiten Sammelleiters zugeordnet ist, ein dritter Bereich des Funktionselementes, der von einem dritten Abschnitt des ersten Sammelleiters und einem dritten Abschnitt des zweiten Sammelleiters kontaktiert wird. Wird **an diesen** dritten Bereich keine Spannung angelegt, so bildet der zweite Bereich im teilweise aktivierten Zustand einen optisch ansprechenden Übergang zwischen dem vollständig aktivierten ersten Bereich und dem inaktiven dritten Bereich.

In einer bevorzugten Ausführungsform des Verfahrens wird die zweite elektrische Spannung U₂ nach einer variabel festlegbaren Zeitspanne auf den Betrag der ersten elektrischen Spannung U₁ erhöht, wodurch auch der zweite Bereich vollständig aktiviert wird. Besonders bevorzugt wird danach oder zeitgleich zwischen einem dritten Abschnitt des ersten Sammelleiters und einem dritten Abschnitt des zweiten Sammelleiters eine dritte Spannung U₃ angelegt, deren Betrag geringer ist als der Betrag der Spannung U₁. In einem dritten Bereich des Funktionselementes, in dem die Spannung U₃ anliegt, findet somit ebenfalls ein teilweiser Schaltvorgang des Funktionselementes statt. Für den Betrachter des Funktionselementes erscheint der Schaltvorgang als wellenförmige Ausbreitung des aktiven Bereichs des Funktionselementes.

Besonders bevorzugt umfasst das erfindungsgemäße Verfahren zum Schalten des erfindungsgemäßen Funktionselementes die folgenden Schritte:
a) zwischen einem n-ten Abschnitt des ersten Sammelleiters und einem n-ten Abschnitt des zweiten Sammelleiters wird eine erste elektrische Spannung U₁ angelegt wird, die der Schaltspannung des Funktionselementes entspricht,
b) zwischen einem (n+1)-ten Abschnitt des ersten Sammelleiters und einem (n+1)-ten Abschnitt des zweiten Sammelleiters wird eine zweite elektrische Spannung U₂ angelegt,
c) die elektrische Spannung zwischen dem (n+1)-ten Abschnitt des ersten Sammelleiters und dem (n+1)-ten Abschnitt des zweiten Sammelleiters auf den Betrag der ersten elektrischen Spannung U₁ erhöht wird,
d) zwischen einem (n+2)-ten Abschnitt des ersten Sammelleiters und einem (n+2)-ten Abschnitt des zweiten Sammelleiters eine zweite elektrische Spannung U₂ angelegt wird,
e) die Schritte c) und d) wiederholt werden bis zwischen allen Abschnitten des ersten Sammelleiters und den zugehörigen Abschnitten des zweiten Sammelleiters eine erste elektrische Spannung U₁ anliegt.

Der n-te Abschnitt und der (n+1)-te Abschnitt eines Sammelleiters können benachbart zueinander sein oder nicht. Umfasst das Funktionselement mehr als einen ersten Sammelleiter und/oder mehr als einen zweiten Sammelleiter, so können der n-te Abschnitt und der (n+1)-te Abschnitt eines Sammelleiters auch an verschiedenen Seitenkanten des Funktionselementes liegen. Auf diese Weise kann je nach Anordnung der Abschnitte und Reihenfolge in der diese angesteuert werden, eine graduelle Schaltung des Funktionselementes erfolgen, wobei wahlweise ein Gradient gehalten werden kann oder das Funktionselement schrittweise von einem inaktiven in einen aktiven Zustand überführt werden kann.

Insbesondere beträgt die zweite elektrische Spannung U₂ zwischen 10 % und 80 % der ersten elektrischen Spannung U₁, bevorzugt zwischen 20% und 50 % der ersten elektrischen Spannung U₁. Innerhalb dieser Bereiche ist ein teilweises Schalten der aktiven Schicht besonders begünstigt. Die Änderung der optischen Eigenschaften ist einerseits deutlich sichtbar und gut vom inaktiven Bereich des Funktionselementes zu unterscheiden und andererseits wesentlich schwächer als im vollständig aktivierten Bereich des Funktionselementes.

Das Anlegen einer Spannung in Bereichen des Funktionselementes sowie eine entsprechende Überwachung der Spanungsverläufe kann mittels dem Fachmann bekannter Steuereinheiten erfolgen. Ein übermäßiges Laden oder Entladen des Funktionselementes sollte dabei verhindert werden um langfristig Schäden an der aktiven Schicht auszuschließen. Um dies zu verhindern wird die Spannung bevorzugt nicht constant angelegt, sondern der Status jedes Bereichs wird überwacht durch Messung der Leerlaufspannung zwischen den Sammelleiterabschnitten des entsprechenden Bereichs. Die Leerlaufspannung sollte dabei ungefähr konstant gehalten werden.

Die Erfindung wird anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein. Es zeigen:
Figuren 1a-e verschiedene Ansichten eines erfindungsgemäßen Funktionselementes,
Figuren 2a-2b eine Verbundscheibe umfassend ein erfindungsgemäßes Funktionselement,
Figuren 3a-3b das erfindungsgemäße Funktionselement der Verbundscheibe gemäß Figuren 2a-2b und
Figuren 4a-4c schematische Darstellungen der Schaltvorgänge einer erfindungsgemäßen Verbundscheibe.

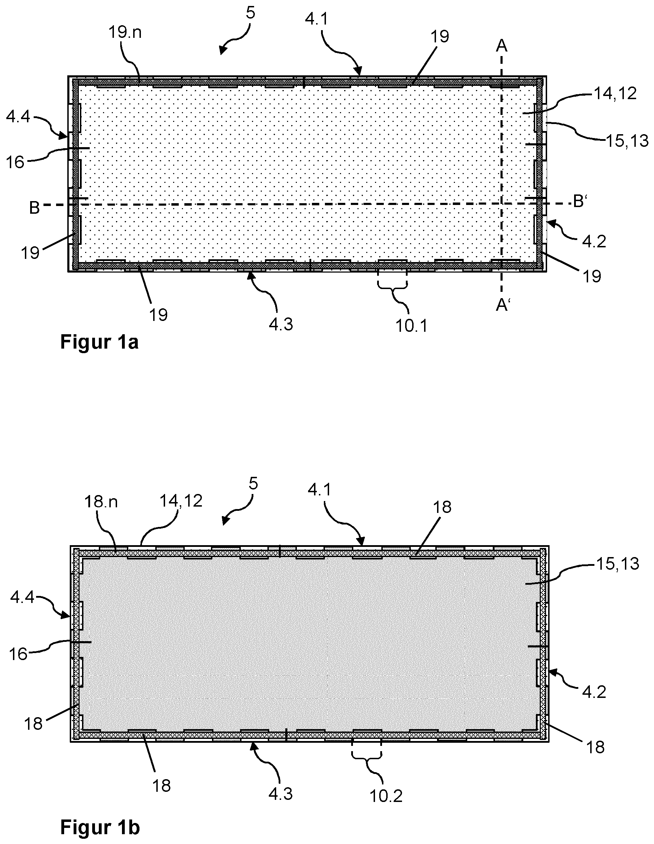

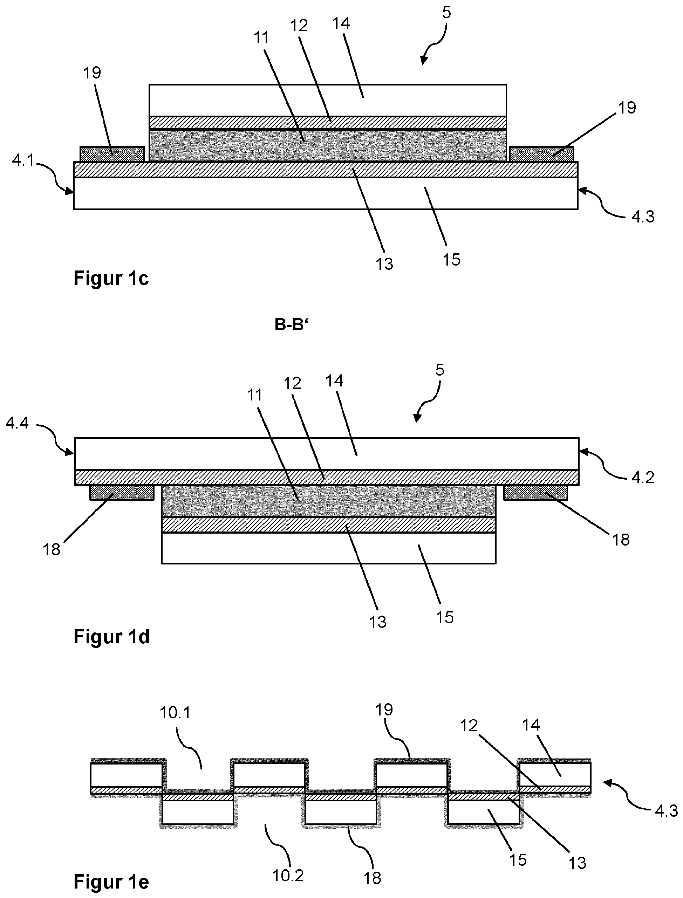

Figuren 1 a bis 1e zeigen ein erfindungsgemäßes Funktionselement 5 umfassend vier Seitenkanten 4.1, 4.2, 4.3, 4.4. Das Funktionselement 5 ist eine Mehrschichtfolie mit elektrisch steuerbaren optischen Eigenschaften, bestehend aus einer aktiven Schicht 11 zwischen zwei Flächenelektroden 12, 13 und zwei Trägerfolien 14, 15. Die aktive Schicht 11 ist eine elektrochrome Schicht, die ihre Farbgebung in Abhängigkeit der an die Flächenelektroden angelegten elektrischen Spannung verändert, wodurch die optischen Eigenschaften geregelt werden können. Die Trägerfolien 14, 15 bestehen aus PET und weisen eine Dicke von beispielsweise 0,125 mm auf. Die Trägerfolien 14, 15 sind mit einer zur aktiven Schicht 11 weisenden Beschichtung aus ITO mit einer Dicke von etwa 100 nm versehen, welche die erste Flächenelektrode 12 und die zweite Flächenelektrode 13 ausbilden. Die Flächenelektroden 12, 13 sind über Sammelleiter 18, 19 und nicht dargestellte Verbindungskabel mit der Bordelektrik verbindbar. Die Sammelleiter 18, 19 sind mittels Trennlinien 16 in Abschnitte 18.n, 19.n unterteilt, die über Verbindungskabel einzeln angesteuert werden können. Figur 1a zeigt eine Draufsicht auf die erste Trägerfolie 14 des Funktionselementes 5. Entlang der Seitenkanten 4.1, 4.2, 4.3 und 4.4 des Funktionselementes 5 sind erste Aussparungen 10.1 in die erste Trägerfolie 14 eingebracht, wobei im Bereich der ersten Aussparungen 10.1 die erste Trägerfolie 14 und die darauf befindliche erste Flächenelektrode 12 entfernt sind. Auch die aktive Schicht 11 ist in diesem Bereich entfernt, so dass die zweite Flächenelektrode 13 frei liegt. Entlang der Seitenkanten 4.1, 4.2, 4.3, 4.4 ist auf der der ersten Flächenelektrode 12 abgewandten Oberfläche der ersten Trägerfolie 14 umlaufend ein zweiter Sammelleiter 19 angebracht, wobei dieser im Bereich der ersten Aussparungen 10.1 durch diese hindurchgreift und die zweite Flächenelektrode 13 elektrisch leitend kontaktiert. Figur 1b zeigt eine Draufsicht auf die zweite Trägerfolie 15 des Funktionselementes 5 gemäß Figur 1a. Die zweite Trägerfolie 15 weist umlaufend entlang der Seitenkanten 4.1, 4.2, 4.3, 4.4 zweite Aussparungen 10.2 auf, die alternierend zu den ersten Aussparungen 10.1 der ersten Trägerfolie 14 angebracht sind. Entlang der Seitenkanten 4.1, 4.2, 4.3, 4.4 ist auf der der zweiten Flächenelektrode 13 abgewandten Oberfläche der zweiten Trägerfolie 15 umlaufend ein erster Sammelleiter 18 angebracht, der im Bereich der zweiten Aussparungen 10.2 durch diese hindurchgreift und die erste Flächenelektrode 12 elektrisch leitend kontaktiert. Figur 1c zeigt einen Querschnitt der Funktionsfolie 5 entlang der Schnittlinie AA' gemäß Figur 1a, während in Figur 1d ein Querschnitt entlang der Schnittlinie BB' der Figur 1a gezeigt ist. In Figur 1e wird eine Ansicht der Funktionsfolie 5 in Draufsicht auf die Seitenkante 4.3 gezeigt. Das Funktionselement 5 ist umlaufend mit einem ersten Sammelleiter 18 und einem zweiten Sammelleiter 19 versehen, wodurch ein besonders gleichmäßiger Schaltvorgang des Funktionselementes 5 erzeugt werden kann.

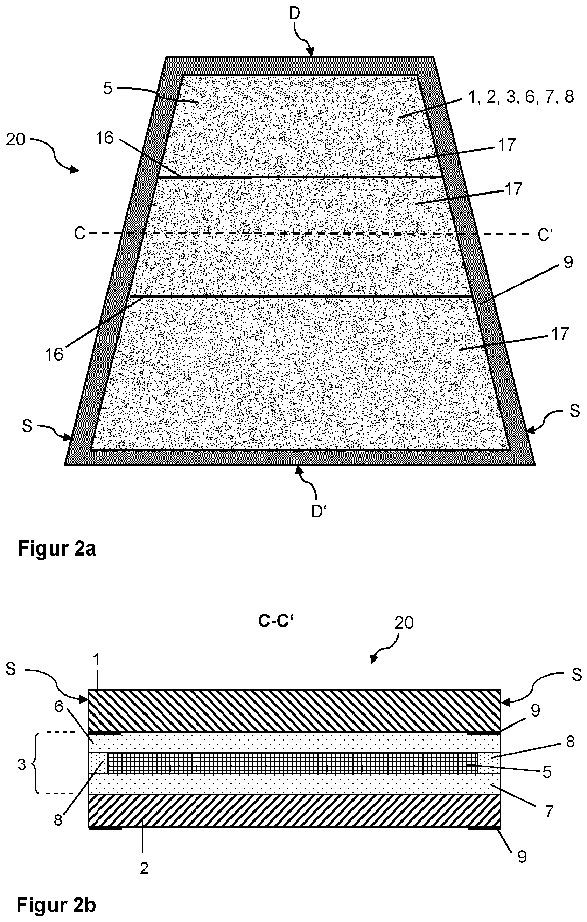

Figuren 2a und 2b zeigen eine Ausgestaltung einer erfindungsgemäßen Verbundscheibe 20 als Dachscheibe, wobei in Figur 2a eine Draufsicht dargestellt ist und Figur 2b einen Querschnitt entlang der Schnittlinie CC' der Figur 2a zeigt. Die Dachscheibe umfasst eine erste Scheibe 1, die als Außenscheibe dient, und eine zweite Scheibe 2 als Innenscheibe. Die Innenscheibe ist dabei die zum Fahrzeuginnenraum gerichtete Scheibe, während die Außenscheibe zur Fahrzeugumgebung weist. Die erste Scheibe 1 und die zweite Scheibe 2 sind über eine Zwischenschicht 3 miteinander verbunden. Die erste Scheibe 1 besteht aus klarem Kalk-Natron-Glas mit einer Dicke von 2,1 mm. Die zweite Scheibe 2 besteht aus Kalk-Natron-Glas mit einer Dicke von 1,6 mm und ist grau getönt. Das getönte Innenglas trägt zur ansprechenden Erscheinung der Scheibe bei, auch für den Fahrzeuginsassen bei einem Blick durch die Dachscheibe. Die Verbundscheibe als Dachscheibe weist eine in Einbaulage der Windschutzscheibe zugewandte vordere Dachkante D und eine in Einbaulage der Heckscheibe zugewandte hintere Dachscheibe D' auf.

Die Dachscheibe ist mit einem Funktionselement 5 als großflächige Verschattung ausgestattet, wobei das Funktionselement 5 ein elektrochromes Funktionselement ist, das in die Zwischenschicht 3 eingelagert ist. Die Zwischenschicht 3 umfasst insgesamt drei thermoplastischen Verbundfolien 6, 7, 8, die jeweils durch eine thermoplastische Folie mit einer Dicke von 0,38 mm aus PVB ausgebildet sind. Die erste thermoplastische Verbundfolie 6 ist mit der ersten Scheibe 1 verbunden, die zweite thermoplastische Verbundfolie 7 mit der zweiten Scheibe 2. Die dazwischenliegende thermoplastische Rahmenfolie 8 weist einen Ausschnitt auf, in welchen das Funktionselement 5 passgenau, das heißt an allen Seiten bündig, eingelegt ist. Die dritte thermoplastische Schicht bildet also gleichsam eine Art Passepartout für das Funktionselement 5, welches somit rundum in thermoplastisches Material eingekapselt und dadurch geschützt ist. Die thermoplastischen Verbundfolien 6, 7, 8 weisen optional eine Tönung auf, wobei eine oder mehrere der Folien vollständig oder teilweise getönt sein können. Je nach Dicke des Funktionselementes 5 und daraus resultierendem Dickenunterschied zum Bereich ohne Funktionselement 5, kann auf die Rahmenfolie 8 verzichtet werden. Dies ist darüber hinaus abhängig von der Komplexität der Scheibenbiegung der Verbundscheibe. Allgemein lässt sich feststellen, dass bei geringen Dickenunterschieden zwischen Bereichen mit Funktionselement und Bereichen ohne Funktionselement sowie bei geringer Komplexität der Biegung auf eine Rahmenfolie verzichtet werden kann.

Optional kann eine weitere thermoplastische Verbundfolie (nicht gezeigt) benachbart zur Außenscheibe (erste Scheibe 1) eingebracht werden. Über die weitere thermoplastische Verbundfolie können beispielsweise Trägerfolien mit Funktionsschichten eingebunden werden, beispielsweise eine Trägerfolie mit einer infrarotreflektierenden Beschichtung. Die infrarotreflektierende Beschichtung wird dabei in Richtung der ersten Scheibe 1 (Außenscheibe) orientiert und dient dazu eine Erwärmung des Fahrgastinnenraums durch Sonneneinstrahlung zu vermindern.

Die Dachscheibe weist einen umlaufenden Abdeckdruck 9 auf, der sowohl die Verklebung der Verbundscheibe mit der Fahrzeugkarosserie als auch die elektrische Kontaktierung der Flächenelektroden des Funktionselementes 5 verdeckt. Der umlaufende periphere Abdeckdruck 9 ist durch ein opakes Emaille auf den innenraumseitigen Oberflächen (in Einbaulage dem Innenraum des Fahrzeugs zugewandt) der ersten Scheibe 1 und der zweiten Scheibe 2 ausgebildet. Der Abstand des Funktionselements 5 zur vorderen Dachkante D, zur hinteren Dachkante D' und den Seitenkanten der Dachscheibe ist kleiner als die Breite des Abdeckdrucks 9, so dass die Seitenkanten 4.1, 4.2, 4.3, 4.4 des Funktionselements 5 durch den Abdeckdruck 9 verdeckt sind. Dabei werden auch die elektrischen Anschlüsse sinnvollerweise im Bereich des Abdeckdrucks 9 angebracht und somit vorteilhaft kaschiert.

Für die thermoplastischen Verbundfolien 6, 7 und die thermoplastische Rahmenfolie 8 kann bevorzugt ein sogenanntes "High Flow PVB" verwendet werden, welches im Vergleich zu Standard-PVB-Folien ein stärkeres Fließverhalten aufweist. So zerfließen die Schichten stärker um das Funktionselement 5 herum, wodurch ein homogenerer optischer Eindruck entsteht und der Übergang von Funktionselement 5 zu Rahmenfolie 8 weniger stark auffällt. Das "High Flow PVB" kann für alle oder auch nur für eine oder mehrere der thermoplastischen Folien 6, 7, 8 mit direktem Kontakt zum Funktionselement 5 verwendet werden.

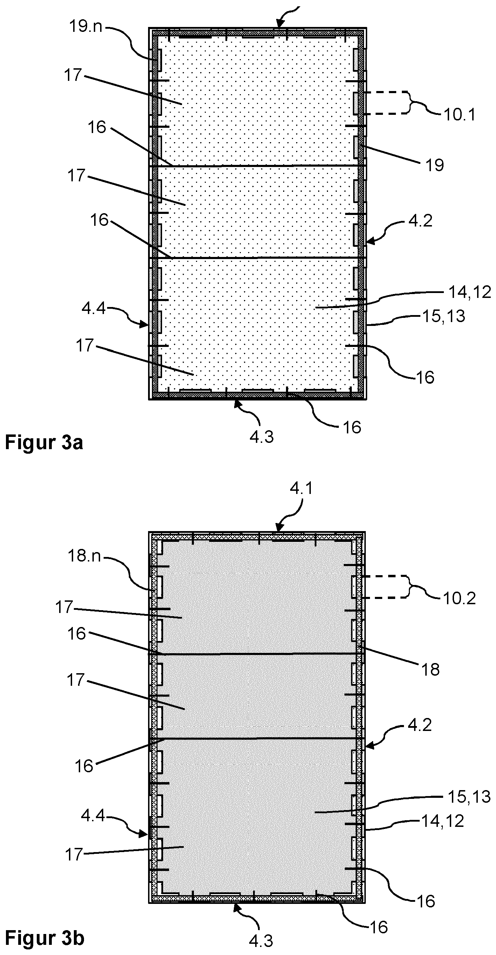

Figuren 3a und 3b zeigen das Funktionselement 5 der Verbundscheibe 20 gemäß Figuren 2a und 2b vor Integration des Funktionselementes 5 in die Verbundscheibe 20, wobei auch die elektrische Kontaktierung des Funktionselementes 5 mit Sammelleitern 18, 19 ersichtlich ist. Figur 3a zeigt eine Draufsicht des Funktionselementes 5 auf die erste Trägerfolie 14, während Figur 3b eine Draufsicht auf die zweite Trägerfolie 15 zeigt. Das Funktionselement 5 entspricht im Wesentlichen dem in Figuren 1a-1e beschriebenen. Im Unterschied dazu sind zumindest in der ersten Flächenelektrode 12 Trennlinien eingebracht. Zwei dieser Trennlinien 16 verlaufen durchgehend zwischen der ersten Seitenkante 4.1 und der vierten Seitenkante 4.4, die einander gegenüberliegen und unterteilen die erste Flächenelektrode 12 in unabhängig voneinander schaltbare Bereiche 17. Die erste Flächenelektrode 12 weist beispielsweise Trennlinien 16 mit einer Breite von jeweils 200 µm auf, die mittels Laserverfahren eingebracht sind. Die Trennlinien 16 isolieren die Bereiche 17 elektrisch voneinander. Die Anzahl der Bereiche 17 kann je nach Anwendung oder Kundenwunsch frei gewählt werden. Bevorzugt sind die Trennlinien 16 zur Unterteilung der Bereiche 17 in die erste Flächenelektrode 12, in die zweite Flächenelektrode 14 und in die aktive Schicht 11 eingebracht. Der erste Sammelleiter 18 und der zweite Sammelleiter 19 sind mittels Trennlinien 16 in Abschnitte 18.n des ersten Sammelleiters 18 und Abschnitte 19.n des zweiten Sammelleiters 19 unterteilt. Die Trennlinien 16 sind dabei zur Unterteilung des zweiten Sammelleiters 19 jeweils zwischen benachbarten ersten Aussparungen 10.1 in diesen Sammelleiter 19 eingebracht. Zwischen benachbarten zweiten Aussparungen 10.2 sind jeweils Trennlinien 16 in den ersten Sammelleiter 18 eingebracht. So befindet sich innerhalb jeder Aussparung 10 ein elektrisch unabhängig steuerbarer Abschnitt 18.n, 19.n eines Sammelleiters 18, 19. Somit können auch innerhalb der Bereiche 17 wiederum einzelne Teilbereiche unabhängig voneinander gesteuert werden, wobei sich zwischen den Bereichen 17 eine scharfe Abgrenzung ergibt und innerhalb der Bereiche ein fließender Verlauf zwischen aktiven und inaktiven Bereichen des Funktionselementes vorliegt.

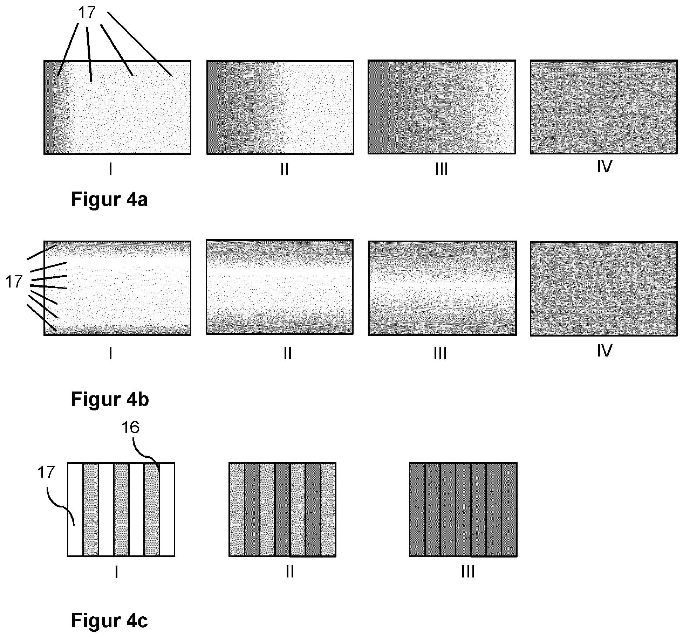

Figuren 4a, 4b und 4c zeigen beispielhafte schematische Ansichten der Schaltvorgänge jeweils eines Funktionselementes 5, wobei Bereiche 17 sukzessive durch Anlegen einer Spannung an den entsprechenden Abschnitten der Sammelleiter vom inaktiven in einen aktiven Zustand versetzt werden. Figuren 4a und 4b zeigen dabei einen fließenden Verlauf der elektrisch steuerbaren optischen Eigenschaften zwischen benachbarten Bereichen 17. Gemäß Figur 4c sind Trennlinien 16 zwischen den Bereichen 17 angebracht, so dass eine scharfe Trennung der Bereiche sichtbar ist.

### Bezugszeichenliste:

- 1: erste Scheibe
- 2: zweite Scheibe
- 3: Zwischenschicht
- 4.1, 4.2, 4.3, 4.4: Seitenkanten des Funktionselementes
- 5: Funktionselement mit elektrisch steuerbaren optischen Eigenschaften
- 6: erste thermoplastische Verbundfolie
- 7: zweite thermoplastische Verbundfolie
- 8: thermoplastische Rahmenfolie
- 9: Abdeckdruck
- 10: Aussparungen
- 10.1: erste Aussparungen
- 10.2: zweite Aussparungen
- 11: aktive Schicht des Funktionselements 5
- 12: erste Flächenelektrode des Funktionselements 5
- 13: zweite Flächenelektrode des Funktionselements 5
- 14: erste Trägerfolie
- 15: zweite Trägerfolie
- 16: Trennlinien
- 17: Bereiche
- 18: erste Sammelleiter
- 19: zweite Sammelleiter
- 20: Verbundscheibe

- D: vordere Dachkante der Verbundscheibe
- D': hintere Dachkante der Verbundscheibe
- S: Seitenkanten der Verbundscheibe

- A-A', B-B', C-C': Schnittlinie

## Patentansprüche

1. Funktionselement (5) mit elektrisch steuerbaren optischen Eigenschaften mit mehreren Seitenkanten (4.1, 4.2, 4.3, 4.4) mindestens umfassend eine erste Trägerfolie (14) mit einer ersten Flächenelektrode (12) und eine zweite Trägerfolie (15) mit einer zweiten Flächenelektrode (13) und eine flächig zwischen der ersten Flächenelektrode (12) und der zweiten Flächenelektrode (13) angeordnete aktive Schicht (11), wobei
- an mindestens einer ersten Seitenkante (4.1) ein erster Sammelleiter (18) und ein zweiter Sammelleiter (19) angeordnet sind,
- die erste Trägerfolie (14) mindestens eine erste Aussparung (10.1) und die zweite Trägerfolie (15) mindestens eine zweite Aussparung (10.2) aufweist, und
wobei
- der erste Sammelleiter (18) auf der der zweiten Flächenelektrode (13) abgewandten Oberfläche der zweiten Trägerfolie (15) angeordnet ist und im Bereich der mindestens einen zweiten Aussparung (10.2) durch diese hindurchtritt und die erste Flächenelektrode (12) elektrisch leitend kontaktiert,
- der zweite Sammelleiter (19) auf der der ersten Flächenelektrode (12) abgewandten Oberfläche der ersten Trägerfolie (14) angeordnet ist und im Bereich der mindestens einen ersten Aussparung (10.1) durch diese hindurchtritt und die zweite Flächenelektrode (13) elektrisch leitend kontaktiert und
- der mindestens eine erste Sammelleiter (18) in mindestens einen ersten Abschnitt (18.1) und mindestens einen zweiten Abschnitt (18.2) unterteilt ist, die unabhängig voneinander ansteuerbar sind und/oder der mindestens eine zweite Sammelleiter (19) in mindestens einen ersten Abschnitt (19.1) und mindestens einen zweiten Abschnitt (19.2) unterteilt ist, die unabhängig voneinander ansteuerbar sind und
- die ersten Aussparungen (10.1) und die zweiten Aussparungen (10.2) alternierend zueinander angeordnet sind.

2. Funktionselement (5) nach Anspruch 1, wobei zumindest an einer zweiten Seitenkante (4.2) des Funktionselementes (5) mindestens ein weiterer erster Sammelleiter (18) und/oder zweiter Sammelleiter (19) angeordnet ist.

3. Funktionselement (5) nach Anspruch 1 oder 2, wobei an der ersten Seitenkante (4.1), der zweiten Seitenkante (4.2), der dritten Seitenkante (4.3) und der vierten Seitenkante (4.4) jeweils ein erster Sammelleiter (18) und ein zweiter Sammelleiter (19) angeordnet sind.

4. Funktionselement (5) nach einem der Ansprüche 1 bis 3, wobei die erste Flächenelektrode (12) und/oder die zweite Flächenelektrode (13) mindestens eine Trennlinie (16) umfasst, die das Funktionselement (5) in unabhängig voneinander schaltbare Bereiche (17) unterteilt.

5. Funktionselement (5) nach einem der Ansprüche 1 bis 4, wobei die aktive Schicht (11) eine elektrochrome Schicht ist.

6. Funktionselement (5) nach einem der Ansprüche 1 bis 5, wobei die ersten Sammelleiter (18) und die zweiten Sammelleiter (19) eine elektrisch leitfähige Struktur, bevorzugt enthaltend Silber, umfassen und eine Dicke von 5 µm bis 40 µm aufweisen.

7. Funktionselement (5) nach einem der Ansprüche 1 bis 6, wobei die erste Flächenelektrode (12) und die zweite Flächenelektrode (13) zumindest ein Metall, eine Metalllegierung oder ein transparentes leitfähiges Oxid, bevorzugt ein transparentes leitfähiges Oxid, enthalten und eine Dicke von 10 nm bis 2 µm aufweisen.

8. Verbundscheibe (20) mindestens umfassend ein Funktionselement (5) nach einem der Ansprüche 1 bis 7, eine thermoplastische Zwischenschicht (3), eine erste Scheibe (1) und eine zweite Scheibe (2), wobei die thermoplastische Zwischenschicht (3) eine erste thermoplastische Verbundfolie (6) aufweist, die zwischen Funktionselement (5) und erster Scheibe (1) angeordnet ist, und eine zweite thermoplastische Verbundfolie (7) aufweist, die zwischen Funktionselement (5) und zweiter Scheibe (2) angeordnet ist.

9. Verfahren zum Schalten eines Funktionselementes (5) nach einem der Ansprüche 1 bis 7, wobei zumindest zwischen einem ersten Abschnitt (18.1) des ersten Sammelleiters (18) und einem ersten Abschnitt (19.1) des zweiten Sammelleiters (19) eine erste elektrische Spannung U₁ angelegt wird, die der Schaltspannung des Funktionselementes (5) entspricht, und zwischen einem zweiten Abschnitt (18.2) des ersten Sammelleiters (18) und einem zweiten Abschnitt (19.2) des zweiten Sammelleiters (19) eine zweite elektrische Spannung U₂ angelegt wird, deren Betrag geringer ist als der Betrag der Spannung U₁.

10. Verfahren nach Anspruch 9, wobei die zweite elektrische Spannung U₂ auf den Betrag der ersten elektrischen Spannung U₁ erhöht wird und bevorzugt zwischen einem dritten Abschnitt (18.3) des ersten Sammelleiters (18) und einem dritten Abschnitt (19.3) des zweiten Sammelleiters (19) eine dritte Spannung U₃ angelegt wird, deren Betrag geringer ist als der Betrag der Spannung U₁.

11. Verfahren nach Anspruch 9 oder 10, wobei
a) zwischen einem n-ten Abschnitt (18.n) des ersten Sammelleiters (18) und einem n-ten Abschnitt (19.n) des zweiten Sammelleiters (19) eine erste elektrische Spannung U₁ angelegt wird, die der Schaltspannung des Funktionselementes (5) entspricht,
b) zwischen einem (n+1)-ten Abschnitt (18.n+1) des ersten Sammelleiters (18) und einem (n+1)-ten Abschnitt (19.n+1) des zweiten Sammelleiters (19) eine zweite elektrische Spannung U₂ angelegt wird,
c) die elektrische Spannung zwischen dem (n+1)-ten Abschnitt (18.n+1) des ersten Sammelleiters (18) und dem (n+1)-ten Abschnitt (19.n+1) des zweiten Sammelleiters (19) auf den Betrag der ersten elektrischen Spannung U₁ erhöht wird,
d) zwischen einem (n+2)-ten Abschnitt (18.n+2) des ersten Sammelleiters (18) und einem (n+2)-ten Abschnitt (19.n+2) des zweiten Sammelleiters (19) eine zweite elektrische Spannung U₂ angelegt wird,
e) die Schritte c) und d) wiederholt werden bis zwischen allen Abschnitten des ersten Sammelleiters (18) und den zugehörigen Abschnitten des zweiten Sammelleiters (19) eine erste elektrische Spannung U₁ anliegt.

12. Verfahren nach einem der Ansprüche 9 bis 11, wobei die zweite elektrische Spannung U₂ zwischen 10 % und 80 % der ersten elektrischen Spannung U₁, bevorzugt zwischen 20% und 50 % der ersten elektrischen Spannung U₁, beträgt.

## Claims

1. Functional element (5) having electrically controllable optical properties with a plurality of side edges (4.1, 4.2, 4.3, 4.4) at least comprising a first carrier film (14) having a first flat electrode (12) and a second carrier film (15) having a second flat electrode (13) and an active layer (11) arranged flat between the first flat electrode (12) and the second flat electrode (13), wherein
- a first bus bar (18) and a second bus bar (19) are arranged on at least one first side edge (4.1),
- the first carrier film (14) has at least one first recess (10.1) and the second carrier film (15) has at least one second recess (10.2), and
wherein
- the first bus bar (18) is arranged on the surface of the second carrier film (15) facing away from the second flat electrode (13) and in the region of the at least one second recess (10.2) passes through the latter and contacts the first flat electrode (12) electrically conductively,
- the second bus bar (19) is arranged on the surface of the first carrier film (14) facing away from the first flat electrode (12) and in the region of the at least one first recess (10.1) passes through the latter and contacts the second flat electrode (13) electrically conductively, and
- the at least one first bus bar (18) is divided into at least one first section (18.1) and at least one second section (18.2), which can be controlled independently of one another and/or the at least one second bus bar (19) is divided into at least one first section (19.1) and at least one second section (19.2), which can be controlled independently of one another, and
- the first recesses (10.1) and the second recesses (10.2) are arranged alternatingly with respect to one another.

2. Functional element (5) according to Claim 1, wherein at least one further first bus bar (18) and/or second bus bar (19) is arranged at least on a second side edge (4.2) of the functional element (5).

3. Functional element (5) according to Claims 1 or 2, wherein a first bus bar (18) and a second bus bar (19) are each arranged on the first side edge (4.1), the second side edge (4.2), the third side edge (4.3) and the fourth side edge (4.4).

4. Functional element (5) according to any one of Claims 1 to 3, wherein the first flat electrode (12) and/or the second flat electrode (13) comprise at least one separating line (16) which divides the functional element (5) into regions (17) which can be switched independently of one another.

5. Functional element (5) according to any one of Claims 1 to 4, wherein the active layer (11) is an electrochromic layer.

6. Functional element (5) according to any one of Claims 1 to 5, wherein the first bus bars (18) and the second bus bars (19) comprise an electrically conductive structure, preferably containing silver, and have a thickness of 5 µm to 40 µm.

7. Functional element (5) according to any one of Claims 1 to 6, wherein the first flat electrode (12) and the second flat electrode (13) contain at least one metal, a metal alloy, or a transparent conductive oxide, preferably a transparent conductive oxide, and have a thickness of 10 nm to 2 µm.

8. Composite pane (20) at least comprising a functional element (5) according to any one of Claims 1 to 7, a thermoplastic intermediate layer (3), a first pane (1) and a second pane (2), wherein the thermoplastic intermediate layer (3) has a first thermoplastic composite film (6) which is arranged between the functional element (5) and the first pane (1), and a second thermoplastic composite film (7) which is arranged between the functional element (5) and the second pane (2).

9. Method for switching a functional element (5) according to any one of Claims 1 to 7, wherein a first electrical voltage U₁, which corresponds to the switching voltage of the functional element (5), is applied at least between a first section (18.1) of the first bus bar (18) and a first section (19.1) of the second bus bar (19), and a second electrical voltage U₂, the absolute value of which is lower than the absolute value of the voltage U₁, is applied between a second section (18.2) of the first bus bar (18) and a second section (19.2) of the second bus bar (19).

10. Method according to Claim 9, wherein the second electrical voltage U₂ is increased to the absolute value of the first electrical voltage U₁, and a third voltage U₃, the absolute value of which is lower than the absolute value of the voltage U₁, is preferably applied between a third section (18.3) of the first bus bar (18) and a third section (19.3) of the second bus bar (19).

11. Method according to Claims 9 or 10, wherein
a) between an n-th section (18.n) of the first bus bar (18) and an n-th section (19.n) of the second bus bar (19), a first electrical voltage U₁ is applied which corresponds to the switching voltage of the functional element (5),
b) a second electrical voltage U₂ is applied between an (n+1)-th section (18.n+1) of the first bus bar (18) and a (n+1)-th section (19.n+1) of the second bus bar (19),
c) the electrical voltage between the (n+1)-th section (18.n+1) of the first bus bar (18) and the (n+1)-th section (19.n+1) of the second bus bar (19) is increased to the absolute value of the first electrical voltage U₁,
d) a second electrical voltage U₂ is applied between an (n+2)-th section (18.n+2) of the first bus bar (18) and an (n+2)-th section (19.n+2) of the second bus bar (19),
e) the steps c) and d) are repeated until a first electrical voltage U₁ is applied between all sections of the first bus bar (18) and the associated sections of the second bus bar (19).

12. Method according to any one of Claims 9 to 11, wherein the second electrical voltage U₂ is between 10% and 80% of the first electrical voltage U₁, preferably between 20% and 50% of the first electrical voltage U₁.

## Revendications

1. Élément fonctionnel (5) ayant des propriétés optiques contrôlables électriquement avec une pluralité de bords latéraux (4.1, 4.2, 4.3, 4.4) comprenant au moins un premier film support (14) ayant une première électrode plate (12) et un deuxième film support (15) ayant une deuxième électrode plate (13) et une couche active (11) disposée à plat entre la première électrode plate (12) et la deuxième électrode plate (13), dans lequel
- une première barre omnibus (18) et une deuxième barre omnibus (19) sont disposées sur au moins un premier bord latéral (4.1),
- le premier film support (14) comporte au moins un premier évidement (10.1) et le deuxième film support (15) comporte au moins un deuxième évidement (10.2), et
dans lequel
- la première barre omnibus (18) est disposée sur la surface du deuxième film support (15) opposée à la deuxième électrode plate (13) et, dans la zone du au moins un deuxième évidement (10.2), traverse celui-ci et est en contact électriquement conducteur avec la première électrode plate (12),
- la deuxième barre omnibus (19) est disposée sur la surface du premier film support (14) opposée à la première électrode plate (12) et traverse, dans la zone du au moins un premier évidement (10.1), celui-ci et est en contact électriquement conducteur avec la deuxième électrode plate (13), et
- la au moins une première barre omnibus (18) est divisée en au moins une première section (18.1) et au moins une deuxième section (18.2) qui peuvent être commandées indépendamment l'une de l'autre et/ou la au moins une deuxième barre omnibus (19) est divisée en au moins une première section (19.1) et au moins une deuxième section (19.2) qui peuvent être commandées indépendamment l'une de l'autre, et
- les premiers évidements (10.1) et les seconds évidements (10.2) sont disposés en alternance les uns par rapport aux autres.

2. Élément fonctionnel (5) selon la revendication 1, dans lequel au moins une autre première barre omnibus (18) et/ou une autre seconde barre omnibus (19) est disposée au moins sur un second bord latéral (4.2) de l'élément fonctionnel (5).

3. Élément fonctionnel (5) selon les revendications 1 ou 2, dans lequel une première barre omnibus (18) et une deuxième barre omnibus (19) sont disposées chacune sur le premier bord latéral (4.1), le deuxième bord latéral (4.2), le troisième bord latéral (4.3) et le quatrième bord latéral (4.4).

4. Élément fonctionnel (5) selon l'une quelconque des revendications 1 à 3, dans lequel la première électrode plate (12) et/ou la deuxième électrode plate (13) comprennent au moins une ligne de séparation (16) qui divise l'élément fonctionnel (5) en zones (17) pouvant être commutées indépendamment les unes des autres.

5. Élément fonctionnel (5) selon l'une quelconque des revendications 1 à 4, dans lequel la couche active (11) est une couche électrochromique.

6. Élément fonctionnel (5) selon l'une quelconque des revendications 1 à 5, dans lequel les premières barres omnibus (18) et les secondes barres omnibus (19) comprennent une structure électriquement conductrice, de préférence contenant de l'argent, et ont une épaisseur de 5 µm à 40 µm.

7. Élément fonctionnel (5) selon l'une quelconque des revendications 1 à 6, dans lequel la première électrode plate (12) et la deuxième électrode plate (13) contiennent au moins un métal, un alliage métallique ou un oxyde conducteur transparent, de préférence un oxyde conducteur transparent, et ont une épaisseur comprise entre 10 nm et 2 µm.

8. Vitrage composite (20) comprenant au moins un élément fonctionnel (5) selon l'une quelconque des revendications 1 à 7, une couche intermédiaire thermoplastique (3), une première vitre (1) et une deuxième vitre (2), dans lequel la couche intermédiaire thermoplastique (3) comporte un premier film composite thermoplastique (6) qui est disposé entre l'élément fonctionnel (5) et la première vitre (1), et un deuxième film composite thermoplastique (7) qui est disposé entre l'élément fonctionnel (5) et le deuxième vitrage (2).

9. Procédé pour commuter un élément fonctionnel (5) selon l'une quelconque des revendications 1 à 7, dans lequel une première tension électrique U₁, qui correspond à la tension de commutation de l'élément fonctionnel (5), est appliquée au moins entre une première section (18.1) de la première barre omnibus (18) et une première section (19.1) de la deuxième barre omnibus (19), et une deuxième tension électrique U₂, dont la valeur absolue est inférieure à la valeur absolue de la tension U₁, est appliquée entre une deuxième section (18.2) de la première barre omnibus (18) et une deuxième section (19.2) de la deuxième barre omnibus (19).

10. Procédé selon la revendication 9, dans lequel la deuxième tension électrique U₂ est augmentée jusqu'à la valeur absolue de la première tension électrique U₁, et une troisième tension U₃, dont la valeur absolue est inférieure à la valeur absolue de la tension U₁, est de préférence appliquée entre une troisième section (18.3) de la première barre omnibus (18) et une troisième section (19.3) de la deuxième barre omnibus (19).

11. Procédé selon les revendications 9 ou 10, dans lequel
a) entre une n-ième section (18.n) de la première barre omnibus (18) et une n-ième section (19.n) de la deuxième barre omnibus (19), on applique une première tension électrique U₁ qui correspond à la tension de commutation de l'élément fonctionnel (5),
b) une deuxième tension électrique U₂ est appliquée entre une (n+1)-ième section (18.n+1) de la première barre omnibus (18) et une (n+1)-ième section (19.n+1) de la deuxième barre omnibus (19),
c) la tension électrique entre la (n+1 )-ième section (18.n+1) de la première barre omnibus (18) et la (n+1)-ième section (19.n+1) de la deuxième barre omnibus (19) est augmentée jusqu'à la valeur absolue de la première tension électrique U₁,
d) une deuxième tension électrique U₂ est appliquée entre une (n+2)-ième section (18.n+2) de la première barre omnibus (18) et une (n+2)-ième section (19.n+2) de la deuxième barre omnibus (19),
e) les étapes c) et d) sont répétées jusqu'à ce qu'une première tension électrique U₁ soit appliquée entre toutes les sections de la première barre omnibus (18) et les sections associées de la deuxième barre omnibus (19).

12. Procédé selon l'une quelconque des revendications 9 à 11, dans lequel la deuxième tension électrique U₂ est comprise entre 10 % et 80 % de la première tension électrique U₁, de préférence entre 20 % et 50 % de la première tension électrique U₁.
